## Europäisches Patentamt
## European Patent Office
## Office européen des brevets

(11) Veröffentlichungsnummer: **0 296 497**
**A1**

# EUROPÄISCHE PATENTANMELDUNG

(21) Anmeldenummer: **88109667.1**

(22) Anmeldetag: **16.06.88**

(51) Int. Cl.⁴ **G02B 26/02 , G02B 5/00 , B23K 26/02**

(30) Priorität: **19.06.87 LU 86927**

(43) Veröffentlichungstag der Anmeldung:
**28.12.88 Patentblatt 88/52**

(84) Benannte Vertragsstaaten:
**BE DE ES FR GB GR IT LU NL**

(71) Anmelder: **EUROPÄISCHE WIRTSCHAFTSGEMEINSCHAFT Bâtiment Jean Monnet**
**Plateau du Kirchberg**
**L-2820 Luxemburg(LU)**

(72) Erfinder: **Taghizadeh, Mohammad Reza**
**33 Braid Avenue**
**Edinburgh EH10 4SR(GB)**
Erfinder: **Redmond, Ian Russel**
**29 Stoneyhill Terrace**
**Musselburgh Midlothian(GB)**

(74) Vertreter: **Weinmiller, Jürgen**
**Lennéstrasse 9 Postfach 24**
**D-8133 Feldafing(DE)**

(54) **Kontinuierlich variables Laserstrahl-Dämpfungsglied.**

(57) Die Erfindung bezieht sich auf ein kontinuierlich variables Dämpfungsglied für einen kollimatierten Laserstrahl. Dieses Dämpfungsglied ist dadurch gekennzeichnet, daß es eine holographische Dichromat-Gelatineplatte (4), die verstellbar in einem Gehäuse (3) so angeordnet ist, daß der Laserstrahl (1) unter einem fast senkrechten Einfallswinkel auf sie trifft, und eine Blende (10 bis 12) enthält, die hinter der Platte angeordnet ist und ein zentrales Loch (11) für den freien Durchlaß des Strahls aufweist. Die dieser Platte zugewandte Blendenoberfläche ist mit einer Absorptionsschicht (12) bedeckt.

FIG. 1

EP 0 296 497 A1

## Kontinuierlich variables Laserstrahldampfungsglied

Die Erfindung betrifft ein kontinuierlich variables Dämpfungsglied für einen kollimatierten Laserstrahl, das insbesondere für Strahlen im sichtbaren und nahe infraroten Wellenlängenbereich des Spektrums (zwischen etwa 400 und 2000 nm der Wellenlänge) geeignet ist.

Bis heute wird die Dämpfung eines Laserstrahls normalerweise mit Hilfe von Absorptionsplatten erreicht, die in den Laserstrahlweg eingefügt werden. Die Art des Absorptionsmaterials und die Dicke der Platte bestimmen die Dämpfungsrate. Eine Veränderung dieser Rate bedingt das Auswechseln der Platte gegen eine andere oder das Hinzufügen einer zusätzlichen Platte zu einer vorhandenen oder die Verwendung einer Platte mit abgestufter Dichte. Alle dem Strahl entnommmene Energie wird in Wärme umgewandelt und muß abgeführt werden, um die Zerstörung des Absorptionsmaterials zu verhindern. Aus diesem Grund sollte die absorbierte Energie einen gegebenen Wert nicht überschreiten, was entweder eine Begrenzung des Energieniveaus des Strahls oder der höchstmöglichen Absorptionsrate bedeutet.

Die Erfindung will diese Nachteile beseitigen und ein kontinuierlich variables Dämpfungsglied für einen kollimatierten Laserstrahl vorschlagen, das ein hohes Niveau der absorbierten Energie und einen weiten Bereich von Absorptionsgraden ermöglicht.

Dieses Ziel wird erfindungsgemäß durch ein kontinuierlich variables Dämpfungsglied für einen kollimatierten Laserstrahl erreicht, das dadurch gekennzeichnet ist, daß es eine holographische Dichromat-Gelatineplatte, die verstellbar in ein Gehäuse so eingebaut ist, daß der Laserstrahl unter einem fast senkrechten Einfallswinkel auf sie trifft, und eine Blende enthält, die hinter der Platte angeordnet ist und eine zentrales Loch für den freien Durchlaß des Strahls aufweist, wobei die der Platte zugewandte Oberfläche der Blende mit einer Absorptionsschicht bedeckt ist. Die holographische Platte ist so hergestellt, daß sie als Bragg-Diffraktor wirkt.

Die Dämpfungsrate dieses Dämpfungsglieds kann kontinuierlich geändert werden, indem man den Ausstell-Winkel der holographischen Platte zur Strahlachse ändert. Es wurde gefunden, daß fast alle Energie des Strahls durch diese Platte hindurch übertragen wird, wenn sie genau senkrecht in bezug auf den Strahl angeordnet wird, während eine leichte Neigung der Platte Bragg-gebeugte Strahlen hervorruft, die von der Platte in Winkeln ausgehen, welche sich stark von der Strahlachse unterscheiden. Die hinter der Platte angeordnete Blende hat ein zentrales Loch für den freien Durchlaß des ungebeugten Strahls (Beugung nullter Ordnung) und schneidet mit ihrem Rand die Strahlen höherer Beugungsordnung.

Indem man der holographischen Dichromat-Gelatineplatte Verstellmittel zuordnet, die die Platte um eine Achse schwenken können, welche im wesentlichen senkrecht zur Strahlachse liegt, kann die Dämpfungsrate kontinuierlich verändert werden, da der Anteil gebeugter Strahlung höherer Beugungsordnung stark von der Stellung der Platte in bezug auf die Strahlachse abhängt.

Wenn es erwünscht ist, für alle Dämpfungsraten ein Gauss'sches Intensitätsprofil am Ausgang des Dämpfungsglieds vorzu sehen, sollte eine räumliche Filteranordnung hinter der Blende angeordnet werden, die eines solches Profil ergibt.

Die Erfindung wird nun näher anhand der beiliegenden Zeichnu ngen erklärt, in denen

Fig. 1 schematisch ein erfindungsgemäßes Dämpfungsglied zeigt und

Fig. 2 ein Diagramm ist, das die Abhängigkeit zwischen der Durchlaßrate des Dämpfungsglieds und dem Neigungswinkel der holographischen Platte in bezug auf die Strahlachse zeigt.

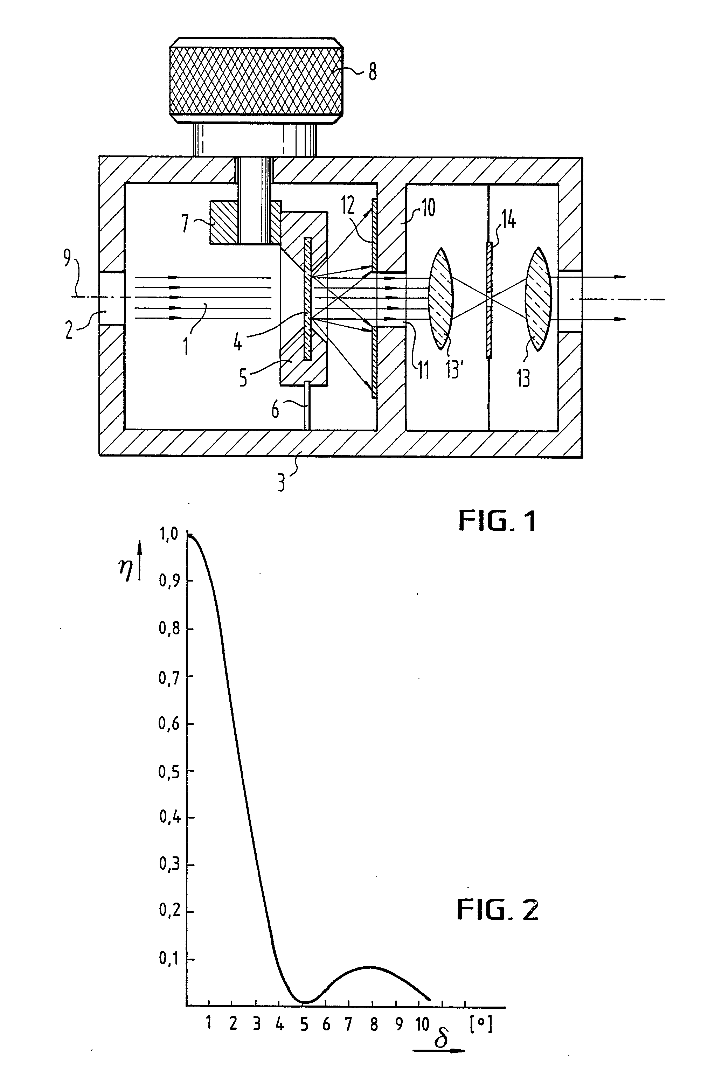

In Fig. 1 ist ein Laserstrahl 1 an ein offenes Einlaßfenster 2 eines Gehäuses 3 angelegt und auf eine holographische Dichromat-Gelatineplatte 4 gerichtet, die in einem Rahmen 5 angeordnet ist, wobei der Rahmen von einer elastischen Halterung 6 in dem Gehäuse 3 gehalten wird. Der Rahmen 5 gehört zu Verstellmitteln, die eine exzentrische Nocke 7 und eine im Gehäuse drehbare Verstellschraube 8 aufweisen. Bei minimaler Dämpfung ist die holographische Platte senkrecht zur Strahlachse 9 angeordnet, während durch Drehen der Schraube 8 die Nocke 7 den Rahmen gegen die Kraft der elastischen Halterung 6 nach hinten drückt und Neigungswinkel von bis zu 5 Grad zwischen der Strahlachse 9 und der Platte 4 bewirkt.

Dichromat-Gelatine-Hologramme sind der Fachwelt gut bekannt, z.B. aus dem Buch von P. Hariharan: Optical Holography, Cambridge Studies in Modern Optics; Cambridge University Press, 1984, Seiten 99 bis 106. Das eingeschriebene Hologramm wird optisch unter Verwendung zweier Laserstrahlen erzeugt. Für nähere Einzelheiten siehe das genannte Buch, Seiten 47 bis 49.

Das Dichromat-Gelatine-Hologramm ist völlig inert in dem obengenannten Wellenlängenbereich.

Hinter der holographischen Platte 4 ist eine Blende 10 mit einem zentralen Loch 11 angeordnet, wobei die Maße des Loches ähnlich denen des Einlaßfensters 2 sind. Auf der der holographischen Platte zugewandten Oberfläche der Blende befindet sich eine Absorptionsschicht 12, die die ungewün-

schte einfallende Laserstrahlung höherer Beugungsordnung absorbieren kann, die von der holographischen Platte in einem Maß gebildet wird, das von der Neigung der Platte in bezug auf die Laserstrahlachse 9 abhängt. Die Blende 10 kann, wenn nötig, mit Kühlmitteln zum Entfernen der absorbierten Energie versehen werden.

Fig. 2 zeigt in Diagrammform die Abhängigkeit der Durchlaßrate des Strahls vom Neigungswinkel der Platte. Daraus ist ersichtlich, daß eine kontinuierliche Änderung der Durchlaßrate zwischen 98% und 2% durch progressive Neigung der holographischen Platte bis zu 5 Grad erreicht wird.

Es ist anzumerken, daß die holographische Platte selbst keine nennenswerte Strahlenergie absorbiert, da die Absorption in der Schicht 12 stattfindet. Aus diesem Grund kann die holographische Platte sehr hohe Dauer-Laserintensitäten bis zu z.B. 1 kW/cm$^2$ aushalten, ohne das Eingangsstrahlprofil zu verändern.

Da die Dämpfung von einer sehr geringen Winkeländerung abhängt, ist die Abweichung des Ausgangsstrahls von seinem ursprünglichen Weg vernachlässigbar. Ein räumliches Filter, das im Ausgangsstrahl des Dämpfungsglieds angeordnet ist und zwei Kollektorlinsen 13' und 13 und eine feine Lochblende 14 dazwischen aufweist, kann ein Gauss'sches Intensitätsprofil des Strahls wiederherstellen, der das zentrale Loch 11 der Blende 10 durchquert hat.

In einer bevorzugten Ausführungsform der Erfindung sind die lichte Weite des Fensters 2 und des Lochs 11 etwa 5 mm, wodurch das Dämpfungsglied für die meisten im Handel erhältlichen Laser verwendbar ist. Die holographische Platte 4 hat eine Dicke von etwa 1 mm und der Wellenlängenbereich des Strahls geht von sichtbarem Licht bis zum nahen Infrarotbereich, wie oben schon gesagt wurde.

Die Erfindung ist nicht auf das in Fig. 1 gezeigte Ausführungsbeispiel begrenzt, insbesondere was die Details der Verstellmittel angeht. So kann der Rahmen im Gehäuse durch Lager, Schienen oder andere übliche Führungsmittel gehalten werden. Es ist auch nicht wesentlich, daß die Schwenkachse der holographischen Platte die Strahlachse in der Mitte der Platte schneidet. In der Ausführungsform gemäß Fig. 1 befindet sich diese Drehachse irgendwo in der Halterung 6. Es ist nur wichtig, daß diese Achse senkrecht zur Zeichnungsebene der Fig. 1 liegt.

## Ansprüche

1. Kontinuierlich variables Dämpfungsglied für einen kollimatierten Laserstrahl, dadurch gekennzeichnet, daß es eine holographische Dichromat-Gelatineplatte (4), die verstellbar in einem Gehäuse (3) so eingebaut ist, daß der Laserstrahl (1) unter fast senkrechten Einfallswinkel auf sie trifft, und eine Blende (10 bis 12) enthält, die hinter der Platte angeordnet ist und ein zentrales Loch (11) für den freien Durchlaß des Strahls aufweist, wobei die der Platte zugewandte Oberfläche der Blende mit einer Absorptionsschicht (12) bedeckt ist.

2. Dämpfungsglied nach Anspruch 1, dadurch gekennzeichnet, daß der Platte Verstellmitteln (7, 8) zugeordnet sind, die die Platte um eine Achse - schwenken, welche im wesentlichen senkrecht zur Strahlachse (9) liegt.

3. Dämpfungsglied nach einem der Ansprüche 1 und 2, dadurch gekennzeichnet, daß eine Raum-Filtereinheit (13,13',14) hinter der Blende angeordnet ist, die es ermöglicht, einen Strahl mit einem fast Gauss'schen Intensitätsprofil zu erzeugen.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-3 323 773 (INSTITUT FÜR NACHRICHTENTECHNIK) * Seite 6, Zeilen 7-20; Ansprüche; Figur 4 * | 1 | G 02 B 26/02 G 02 B 5/00 B 23 K 26/02 |
| A | --- | 2 | |
| Y | WO-A-8 304 317 (HUGHES AIRCRAFT CO.) * Zusammenfassung * --- | 1 | |
| A | FR-A-2 517 131 (OLYMPUS OPTICAL CO., LTD) * Ansprüche; Figuren * --- | 1,2 | |
| A | US-A-4 192 573 (R.B. BROWN, Jr.) * Zusammenfassung; Figuren * --- | 1 | |
| A | US-A-3 549 239 (M.J. BRIENZA et al.) * Ansprüche * --- | 1 | |
| A | EP-A-0 143 743 (GRETAG AG) * Ansprüche; Figuren * ----- | 1 | **RECHERCHIERTE SACHGEBIETE (Int. Cl.4)** G 02 B H 01 S B 23 K |

Der vorliegende Recherchenbericht wurde für alle Patentansprüche erstellt

| Recherchenort | Abschlußdatum der Recherche | Prüfer |
|---|---|---|
| DEN HAAG | 15-09-1988 | PFAHLER R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)